# EUROPEAN PATENT SPECIFICATION

(11) **EP 4 244 106 B1**
(45) Date of publication and mention of the grant of the patent: **16.04.2025**
(21) Application number: 21770071.5
(22) Date of filing: 24.08.2021
(51) Int. Cl.: B60T 11/04, B62D 47/00, B62D 31/02

(54) **SYSTEM OF MODULAR VEHICLES COMPRISING A MODULAR BRAKING DEVICE**
SYSTEM VON MODULAREN FAHRZEUGEN MIT EINER MODULAREN BREMSVORRICHTUNG
SYSTÈME DE VÉHICULES MODULAIRES COMPRENANT UN DISPOSITIF DE FREINAGE MODULAIRE

(30) Priority: 16.11.2020 IT 202000027342
(43) Date of publication of application: 20.09.2023
(73) Proprietor: Getplus S.R.L., 35129 Padova (IT)
(72) Inventor: GECCHELIN, Tommaso, 35129 Padova (IT)
(74) Representative: Lunati & Mazzoni S.r.L.
(86) International application number: PCT/IB2021/057744
(87) International publication number: WO 2022/101699

(56) References cited:
- WO-A1-2016/161216
- DE-C- 835 840
- US-S- D 784 853
- TOMMASO GECCHELIN: "Next Modular Self Driving Vehicle Creates Comfortable Space For Traveling", FUTURISTIC NEWS, 24 July 2013 (2013-07-24), pages 6 pp., XP055524764, Retrieved from the Internet <URL:https://web.archive.org/web/20130724091933/http://futuristicnews.com/next-modular-self-driving-vehicle-creates-comfortable-space-for-traveling/> [retrieved on 20181119]

## Description

### MODULAR BRAKING DEVICE

The present invention relates to a modular braking device adapted to be installed on a modular vehicle system of the type specified in the preamble of the first claim.

Similar devices are described in documents: DE 835 840 C, WO 2016/161216 A1, US D 784 853 and "Next modular self driving vehicle creates comfortable space for traveling", Tommaso Gecchelin, Futuristic News, 24 July 2013 (2013-07-24), page 6 pp., XP055524 764.

Systems are currently known which are suitable for transmitting a braking command to a train of vehicles connected to each other in an articulated manner, not rigidly, therefore with the possibility of relative rotations between the vehicles of the train. Pneumatic and/or inertial braking systems in vehicles towing trailers, or combinations of said systems, are in fact known.

They have connections which can be mechanical, pneumatic or similar.

The known art described includes some important drawbacks.

The pneumatic and/or inertial braking systems typical of vehicles pulling trailers, for example, are not suitable for said trains of vehicles rigidly connected to each other and moreover they do not give the possibility of coupling more than one trailer in succession.

In particular, pneumatic systems are very complex and expensive, and are not suitable for coupled vehicles with their own and independent braking system, such as for example two independent vehicles connected to form a modular vehicle system.

In this situation, the technical task underlying the present invention is to devise a modular braking device capable of substantially obviating at least part of the aforementioned drawbacks.

Within the scope of said technical task, it is an important object of the invention to obtain a device of the "plug and play" type which is operative for coupling two vehicles without the need for an operator.

Another important object of the invention is to provide a modular device, present on vehicles capable of being rigidly connected to each other in a modular vehicle system.

Again, an important object of the invention is to provide a completely mechanical device which does not involve delays in the transmission of the braking command between different vehicles.

In addition, an important object of the invention is to provide a highly safe device in the event of breakdowns in the servo-assisted braking systems of vehicles. Finally, an important object of the invention is to provide a device which can connect a plurality of vehicle braking systems to transmit a command.

The technical task and the specified aims are achieved by a modular braking device adapted to be installed on a modular vehicle system as claimed in the annexed claim 1.

Preferred technical solutions are highlighted in the dependent claims.

The characteristics and advantages of the invention are clarified below by the detailed description of preferred embodiments of the invention, with reference to the accompanying figures, in which:

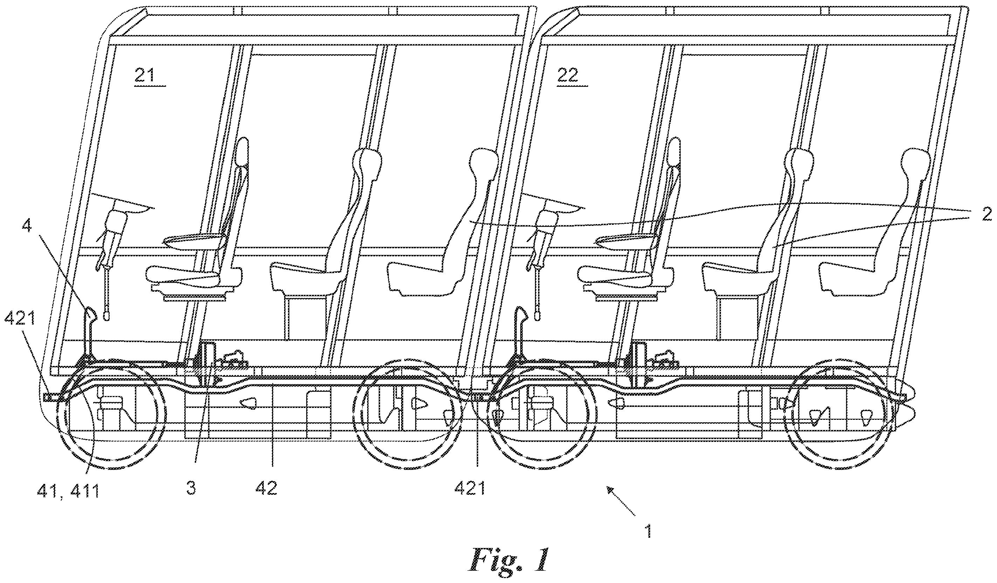

Fig. 1 shows a schematic illustration of modular braking device installed on two modules of a modular system vehicles.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the figures, the modular braking device according to the invention is globally indicated with the number 1.

Preferably, the modular braking device 1 is adapted to be installed on a modular vehicle system 2.

Said modular vehicle system 2 comprising at least two vehicles 21, 22, as shown in the exemplary embodiment of Fig.1.

As will become clear in the following, the device 1 is suitable for being installed on a system 2 of modular vehicles comprising a plurality of vehicles, being in fact a modular device 1 present identical on each vehicle suitable for composing the system 2.

Said vehicles 21, 22, are removably connectable to each other, and when connected they form a rigid train without relative rotations between said vehicles 21, 22. Said vehicles 21, 22 therefore form a rigid train without relative rotations in a horizontal plane, in a plane lateral and in a vertical plane. The structural connection between said vehicles 21, 22 can be carried out according to any system that allows the formation of a rigid train. The connection to form said rigid train must also be understood as a non-articulated connection between said vehicles 21 and 22 to form said system 2, as described above.

Preferably, each of said vehicles 21, 22 comprises a braking system 3 which can be activated by control means 4 accessible by a user. They can be manual, assisted, remote or automatic or more. The braking system 3 can for example be any braking system of the known art. Preferably the braking system 3 is a hydraulic system servo-assisted by a pneumatic vacuum servo.

Said controls 4 can consist of a pedal or any other element capable of transmitting a braking command by moving at least part of the components of the controls 4. Said controls 4 can be actuated by a physical user or by an automatic system, for example a remote control and/or guidance system. Again, preferably, said controls 4 accessible by a user comprise at least the control of the service brake of the vehicles 21, 22.

Preferably, the device 1 according to the present invention comprises, on each of said vehicles 21, 22, connection means 41 for said commands 4 to a transmission bar 42 of the braking command. By connection means 41 in the present document it is meant a system, preferably mechanical, able to transmit the movement caused by a braking command.

In the embodiment shown in Fig.1 said connection means 41 comprise mechanical leverages 411.

Preferably, according to the present invention, the transmission bar 42 extends for the length of the vehicles 21, 22.

Again, preferably, the bars 42 of the vehicles 21, 22 are connected when said vehicles 21, 22 are connected to form said system 2 of modular vehicles. The connection or contact of the bars 42 therefore allows the transmission of a braking command from one vehicle 21 to the other vehicle 22, or vice versa, by means of its mechanical movement at least in a single direction, or rather by pushing at least in the direction that allows the transmission of a braking command from a leading vehicle to a trailing vehicle or vice versa, since generally each braking system 3 of the prior art has a return-to-position system, which returns the system 3 to the non-braking position and the bars 42 thereto and connected to each other. The rigid assembly formed by the connection of said bars 42 allows the actuation of the braking systems 3 of each vehicle of the modular vehicle system 2, through the movement of connection means 41, controls 4 and finally of the actuator of the braking system 3.

Still, preferably according to the present invention the distal ends of said transmission rods 42 are provided with joining means 421 comprising magnetic couplings, mechanical, pneumatic and/or electronic acts to bind together the said transmission bars 42 and in particular of a braking command. Finally, preferably in an alternative embodiment, or in combination with what has been described, said braking system 3, said connecting means 41 and said transmission bar 42 of the braking control are servo-assisted systems.

The operation of the device 1 previously described in structural terms is as follows.

In its simplest embodiment, shown in Fig. 1 The service brake pedal 4 is connected to a lever 41 which pushes in parallel both the cylinder, or any other actuation system, of the braking system 3 of the vehicle wherein it is, either, in parallel a bar 42 which reaches the rear of the vehicle and up to the front end of the same. From the moment of rigid coupling of another vehicle, the rear part of the bar 42 of the leading vehicle comes into contact with the front part of the bar 42 of the tailing vehicle, which in turn pushes on the cylinder of the brake system 3 of the rear vehicle. In this way a bar 42 puts the braking systems 3 of all the connected vehicles in series to form the modular system 2. Therefore, if the driver or equivalent remote or driverless driving system in the lead vehicle presses the brake pedal, the brake cylinder of the vehicles connected in the rear are also pressed, in a completely mechanical way.

The device 1 according to the invention achieves important advantages.

In fact, advantageously this solution does not need complex connection systems, such as for example inertial or electro-pneumatic systems, between one vehicle and another so that the construction and maintenance cost is much cheaper than existing solutions.

Furthermore, a modular braking device 1 fully automatically engages a further modular braking device 1 of another vehicle when the vehicles are rigidly coupled, since the bar 42 comes into contact with that of the rear vehicle.

In addition, advantageously with respect to the systems of the known art, there are no delays in the transmission of the braking command since the mechanical bar 42 is rigid and incompressible, unlike, for example, the braking systems of trailers based on a pneumatic circuit.

A further advantage of the device 1 according to the present invention is that, in the event of failure of the servo assistance on one of the connected means, the modular vehicle system 2 remains safely braked and with relatively little force applied to the pedal or to the controls 4 since the force resulting on bar 42 will always be the sum of the contributions of the brake servo-assistance systems of all the connected units. Finally, at a regulatory and certification level, this system is neither configured as a "brake-by-wire" nor as a braking device for trailers, since each vehicle is rigidly coupled and potentially constitutes an independent unit equipped with traction, steering, braking and own energy source. The resulting vehicle, called modular vehicle system 2, is configured as a single, longer vehicle, not as a combination of tractor and trailer. This aspect makes the system eligible under the ECE13 braking system standard, for one vehicle as type M1/N1 and for two or more vehicles as M2/M3/N2.

The invention is susceptible of variants falling within the scope of the inventive concept defined by the claims.

In this context, all the details can be replaced by equivalent elements and the materials, shapes and dimensions can be any.

## Claims

1. System of modular vehicles comprising a modular braking device (1), said system (2) comprising at least two vehicles (21,22) being connectable to and detachable from each other, wherein said vehicles (21,22), when connected to form said system (2), form a rigid train without relative rotations between said vehicles (21, 22), in which each of said vehicles (21, 22) comprises at least one braking system (3) which can be activated by control means (4) accessible by a user, **characterized in that** said system comprises, on each of said vehicles (21,22), means for connecting said control means (4) to a transmission bar (42) for controlling the braking, said transmission bar (42) extending for the length of each vehicles (21, 22), and wherein said bars (42) of the vehicles (21, 22) are connected when said vehicles (21,22) are connected to form said system (2) of modular vehicles.

2. The system of modular vehicles according to claim 1, wherein said connection means (41) comprise levers (411) mechanics.

3. The system of modular vehicles according to any one of the preceding claims, wherein said controls (4) accessible by a user comprise at least the service brake control of the vehicles (21, 22).

4. The system of modular vehicles according to any one of the preceding claims, wherein said braking system (3), said connection means (41) and said transmission bar (42) of the brake control are servo-assisted systems.

5. The system of modular vehicles according to any one of the preceding claims, wherein the distal ends of said transmission bars (42) are provided with joint means (421) comprising magnetic, mechanical, pneumatic and/or electronic joints suitable for binding between them called transmission bars (42).

## Patentansprüche

1. System von modularen Fahrzeugen, umfassend eine modulare Bremsvorrichtung (1), wobei das System (2) mindestens zwei Fahrzeuge (21,22) umfasst, die miteinander verbindbar und abnehmbar sind, wobei die Fahrzeuge (21,22), wenn sie miteinander verbunden sind, um das System (2) zu bilden, einen starren Zug ohne relative Drehungen zwischen den Fahrzeugen (21,22) bilden, in dem jedes der Fahrzeuge (21,22) mindestens ein Bremssystem (3) umfasst, das durch Steuermittel (4) aktiviert werden kann, die durch einen Benutzer zugänglich sind, **dadurch gekennzeichnet, dass** das System an jedem der Fahrzeuge (21,22) Mittel zur Verbindung der Steuermittel (4) mit einer Übertragungsstange (42) zur Bremssteuerung umfasst, wobei die Übertragungsstange (42) sich über die Länge jedes Fahrzeugs (21,22) erstreckt, und wobei die Stangen (42) der Fahrzeuge (21,22) verbunden sind, wenn die Fahrzeuge (21,22) miteinander verbunden sind, um das System von modularen Fahrzeugen (2) zu bilden.

2. System von modularen Fahrzeugen nach Anspruch 1, wobei die Verbindungsmittel (41) mechanische Hebel (411) umfassen.

3. System von modularen Fahrzeugen nach einem der vorhergehenden Ansprüche, wobei die Steuerungen (4), die durch einen Benutzer zugänglich ist, mindestens die Betriebsbremse-Steuerung der Fahrzeuge (21,22) umfassen.

4. System von modularen Fahrzeugen nach einem der vorhergehenden Ansprüche, wobei das Bremssystem (3), die Verbindungsmittel (41) und die Übertragungsstange (42) der Bremssteuerung servounterstützte Systeme sind.

5. System von modularen Fahrzeugen nach einem der vorhergehenden Ansprüche, wobei die distalen Enden der Übertragungsstangen (42) mit Gelenkmitteln (421) versehen sind, die magnetische, mechanische, pneumatische und/oder elektronische Gelenke umfassen, die geeignet sind, die Übertragungsstangen (42) miteinander zu verbinden.

## Revendications

1. Système de véhicules modulaires comprenant un dispositif de freinage modulaire (1), ledit système (2) comprenant au moins deux véhicules (21,22) pouvant être connectés et détachés l'un de l'autre, dans lequel lesdits véhicules (21,22), lorsqu'ils sont connectés pour former ledit système (2), forment un train rigide sans rotations relatives entre lesdits véhicules (21,22), dans lequel chacun desdits véhicules (21,22) comprend au moins un système de freinage (3) pouvant être activé par des moyens de commande (4) accessibles par un utilisateur, **caractérisé en ce que** ledit système comprend, sur chacun desdits véhicules (21,22), des moyens pour connecter lesdits moyens de commande (4) à une barre de transmission (42) pour la commande du freinage, ladite barre de transmission (42) s'étendant sur toute la longueur de chaque véhicule (21,22), et dans lequel lesdites barres (42) des véhicules (21,22) sont connectées lorsque lesdits véhicules (21,22) sont connectés pour former ledit système (2) de véhicules modulaires.

2. Le système de véhicules modulaires selon la revendication 1, dans lequel lesdits moyens de connexion (41) comprennent des leviers (411) mécaniques.

3. Le système de véhicules modulaires selon l'une quelconque des revendications précédentes, dans lequel lesdits moyens de commande (4) accessibles par un utilisateur comprennent au moins la commande du frein de service des véhicules (21,22).

4. Le système de véhicules modulaires selon l'une quelconque des revendications précédentes, dans lequel ledit système de freinage (3), lesdits moyens de connexion (41) et ladite barre de transmission (42) de la commande de frein sont des systèmes assistés.

5. Le système de véhicules modulaires selon l'une quelconque des revendications précédentes, dans lequel les extrémités distales desdites barres de transmission (42) sont pourvues de moyens d'articulation (421) comprenant des articulations magnétiques, mécaniques, pneumatiques et/ou électroniques adaptées à l'assemblage entre elles desdites barres de transmission (42).
